# EUROPÄISCHE PATENTSCHRIFT

(11) **EP 4 487 088 B1**
(45) Veröffentlichungstag und Bekanntmachung des Hinweises auf die Patenterteilung: **25.11.2026**
(21) Anmeldenummer: 23707311.9
(22) Anmeldetag: 20.02.2023
(51) Int. Cl.: G01F 23/284, G01S 13/88

(54) **FÜLLSTANDSMESSGERÄT**
LEVEL GAUGE
JAUGE DE NIVEAU

(30) Priorität: 04.03.2022 DE 102022105195
(43) Veröffentlichungstag der Anmeldung: 08.01.2025
(73) Patentinhaber: Endress+Hauser SE+Co. KG, 79689 Maulburg (DE)
(72) Erfinder: VOGEL, Markus, 79650 Schopfheim (DE); DAUFELD, Ghislain, 68128 Village Neuf (FR); MALINOVSKIY, Alexey, 79689 Maulburg (DE); ZIEGLER, Markus, 79541 Lörrach (DE)
(74) Vertreter: Endress + Hauser Group Services (Deutschland) AG+Co. KG
(86) Internationale Anmeldenummer: PCT/EP2023/054232
(87) Internationale Veröffentlichungsnummer: WO 2023/165838

(56) Entgegenhaltungen:
- DE-A1- 102018 132 739
- DE-A1- 102019 132 149
- DE-T5- 112004 002 458

## Beschreibung

Die Erfindung betrifft ein Rdar-basiertes Füllstanfmessagerät, mittels dem der Füllstand sicher bestimmt werden kann.

In der Prozessautomatisierungstechnik werden zur Erfassung relevanter Prozessparameter entsprechende Feldgeräte eingesetzt. Zwecks Erfassung der jeweiligen Prozessparameter sind in den entsprechenden Feldgeräten daher geeignete Messprinzipien implementiert, um als Prozessparameter etwa einen Füllstand, einen Durchfluss, einen Druck, eine Temperatur, einen pH-Wert, ein Redoxpotential oder eine Leitfähigkeit zu erfassen. Verschiedenste Feldgeräte-Typen werden von der Firmengruppe Endress + Hauser hergestellt und vertrieben.

Zur Füllstandsmessung von Füllgütern in Behältern haben sich berührungslose Messverfahren etabliert, da sie robust und wartungsarm sind. Ein weiterer Vorteil berührungsloser Messverfahren besteht in der Fähigkeit, den Füllstand quasi kontinuierlich messen zu können. Im Bereich der kontinuierlichen Füllstandsmessung werden daher vorwiegend Radar-basierte Messverfahren eingesetzt (im Kontext dieser Patentanmeldung bezieht sich der Begriff "Radar" auf Signale bzw. elektromagnetische Wellen mit Frequenzen zwischen 0.03 GHz und 300 GHz). Dabei ist prinzipiell eine umso höhere Mess-Auflösung erreichbar, je höher die Frequenz ist. Als Messverfahren hat sich das FMCW *("Frequency Modulated Continuous Wave"*) etabliert. Näher beschrieben wird Radar-basierte Füllstandsmessung beispielsweise in *"Radar Level Detection, Peter Devine, 2000*".

Das Funktionsprinzip von FMCW beruht darauf, ein Radar-Signal mit sich rampenförmig ändernder Frequenz auszusenden. Nach Reflektion an der Füllgutoberfläche wird das entsprechende Empfangssignal signaltechnisch mit dem erzeugten Radar-Signal gemischt, um ein niederfrequentes Zwischenfrequenz-Signal zu erhalten. Im Idealfall, also ohne Rauschen und externe Störeinflüsse wie Störreflexionen, liegt das Zwischenfrequenzsignal Sinusförmig mit definierter Frequenz vor. Dabei repräsentiert die Frequenz des Zwischenfrequenz-Signals den Abstand zum Füllgut bzw. den Füllstand wieder. Um zur Bestimmung des Füllstandes die Frequenz des Zwischenfrequenz-Signals zu ermitteln, wird dieses abschließend per Fourier-Transformation in ein Frequenzspektrum überführt. Dabei repräsentiert das absolute Maximum des Frequenzspektrums den Füllstand.

Die DE 11 2004 002458 T5 beschreibt ein FMCW-Radar basiertes Abstandsmessgerät zur Messung eines Abstandes zu einem Objekt mit einer Auswerte-Einheit, welche eine Mischer-Stufe zur Erzeugung eines Zwischenfrequenz-Signals sowie eine Mittelungs-Stufe umfasst, die ausgelegt ist, einen Durchschnittswert des Zwischenfrequenz-Signals in einem festen Abtastintervall zu ermitteln.

Im Falle von Störeinflüssen und bauteilbedingtem Rauschen wird es jedoch schwieriger, aus dem Frequenzspektrum dasjenige Maximum zu bestimmen, das dem Füllstand zuzuordnen ist, da hierdurch ebenfalls Frequenz-Maxima gebildet werden. Im Extremfall kann dies dazu führen, dass das Füllstandsmessgerät einen falschen Füllstandswert ermittelt, was je nach Prozessanlage mit entsprechend kritischen Situationen verknüpft sein kann. Allgemein ist es diesbezüglich bekannt, das Empfangssignal nach Empfang direkt zu filtern, oder die Frequenzspektren mehrerer Messzyklen zeitlich zu mitteln. Eine direkte Filterung des Empfangs-Signals führt jedoch zu keiner signifikanten Verbesserung des Signal- zu Rauschverhältnisses. Eine Mittelung führt bei sich ändernden Prozessbedingungen zu Nachlauf-Effekten, wie Geisterechos-Echo-Auslöschung etc. Der Erfindung liegt daher die Aufgabe zugrunde, ein diesbezüglich verbessertes, Radar-basiertes Messgerät bereitzustellen.

Die Erfindung löst diese Aufgabe durch ein FMCW-Radar basiertes Abstandsmessgerät gemäß Anspruch 1 zur Messung eines Abstandes zu einem Objekt, das folgende Komponenten umfasst:
Eine Signalerzeugungs-Einheit, die ausgelegt ist, in aufeinanderfolgenden Messzyklen gemäß des FMCW-Verfahrens jeweils ein elektrisches Hochfrequenz-Signal zu erzeugen, wie beispielsweise eine phasengesteuerte Regelschleife (im Englischen als *"PLL bzw. Phase Locked Loop*" bekannt),
eine Antenne, mittels der das Hochfrequenz-Signal als Radar-Signal in Richtung des Objektes aussendbar und nach Reflektion am Objekt als entsprechendes Empfangssignal empfangbar ist, und
eine Auswerte-Einheit, mit
   einer Mischer-Stufe, die ausgelegt ist, anhand des elektrischen Hochfrequenz-Signals und des Empfangssignals gemäß des FMCW-Prinzips pro Messzyklus ein niederfrequentes Zwischenfrequenz-Signal zu erzeugen,
   einer Transformator-Stufe, welche ausgelegt ist, um pro Messzyklus ein Frequenzspektrum des Auswertungssignals zu erstellen,
      wobei die Auswerte-Einheit ausgelegt ist, um anhand des Frequenzspektrums den Abstand zu bestimmen.

Dabei kennzeichnet sich die Auswerte-Einheit erfindungsgemäß durch eine Mittelungs-Stufe, die ausgelegt ist, das Zwischenfrequenz-Signal in Signalrichtung vor Erstellung des Frequenzspektrums zeitlich zu mitteln. Hierdurch lässt sich das Signal- zu Rauschverhältnis deutlich verbessern, so dass das entsprechende Frequenzmaximum im Frequenzspektrum deutlich sicherer ermittelbar ist. Sofern das Abstandsmessgerät zusätzlich eine Analog-/Digital-Wandlerstufe umfasst, die das Zwischenfrequenz-Signal in Signalrichtung vor der Mittelungs-Stufe digitalisiert, wird durch die erfindungsgemäße Mittelung außerdem eine etwaig begrenzte A/D-Wandler-Auflösung und damit verbundenen Ungenauigkeiten ausgemittelt. Fest vorgeschschrieben ist es im Rahmen der Erfindung nicht, wie bzw. in welcher Stärke die Mittelung durchgeführt wird. Beispielsweise kann die Mittelungs-Stufe das Zwischenfrequenz-Signal zeitlich mittels arithmetischer Mittelwertbildung, Summation, Medianbildung, mittels eines FIR- oder IIR-mitteln.

Durch die hohe Sicherheit, mit welcher der korrekte Abstand bestimmbar ist, lässt sich das Abstandsmessgerät insbesondere zur Messung eines Füllstandes eines Füllgutes in einem Behälter verwenden.

Erfindungsgemäß ist die Mittelungs-Stufe derart ausgelegt, so dass sie die zeitliche Mittelung des Zwischenfrequenz-Signals im jeweiligen Messzyklus in Abhängigkeit
- einer Abstands-Änderung des im aktuellen Messzyklus ermittelten Abstandes gegenüber dem in einem vorhergehenden Messzyklus ermittelten Abstand,
- einer Korrelation zwischen dem im aktuellen Messzyklus ermittelten Frequenzspektrum oder Zwischenfrequenz-Signal, und dem in einem vorhergehenden Messzyklus erfassten Frequenzspektrum bzw. Zwischenfrequenz-Signal, oder
- einer durchschnittlichen, absoluten Abweichung zwischen dem im aktuellen Messzyklus erfassten Zwischenfrequenz-Signals und dem in einem vorhergehenden Messzyklus erfassten Zwischenfrequenz-Signal
   ändert bzw. komplett deaktiviert. In diesem Fall kann die Mittelungs-Stufe die Stärke der zeitlichen Mittelung des Zwischenfrequenz-Signals vorzugsweise in Abhängigkeit der Abstands-Änderung, der Korrelation bzw. der Abweichung im aktuellen oder darauffolgenden Messzyklus derart ändern,
- dass die Mittelungs-Stärke mit
   ∘ zunehmender Abstands-Änderung
   ∘ abnehmender Korrelation, und/oder
   ∘ zunehmender Abweichung
      abnimmt, bzw.
- dass die Mittelungs-Stärke mit
   ∘ zunehmender Korrelation,
   ∘ abnehmender Abstands-Änderung, und/oder
   ∘ abnehmender Abweichung
      zunimmt.

Hierdurch lassen sich insbesondere Nachlauf-Effekte im Frequenzspektrum minimieren. Korrespondierend zum erfindungsgemäßen Abstandsmessgerät umfass das entsprechende

Verfahren zur Messung des Abstandes zu einem Objekt mittels des FMCW-Prinzips die in Anspruch 5 spezifizierten Verfahrensschritte.

Unter dem Begriff "*Einheit*" wird im Rahmen der Erfindung prinzipiell eine separate Anordnung bzw. Kapselung derjenigen elektronischen Schaltungen verstanden, die für einen konkreten Einsatzzweck, bspw. zur Hochfrequenz-Signalverarbeitung oder als Schnittstelle vorgesehen sind.

Die jeweilige Einheit kann also je nach Einsatzzweck entsprechende Analogschaltungen zur Erzeugung bzw. Verarbeitung entsprechender analoger Signale umfassen. Ebenso kann die Einheit jedoch auch Digitalschaltungen, wie FPGA's, Microcontroller oder Speichermedien in Zusammenwirken mit entsprechenden Programmen umfassen. Dabei ist das Programm ausgelegt, die erforderlichen Verfahrensschritte durchzuführen bzw. die notwendigen Rechenoperationen anzuwenden. In diesem Kontext können verschiedene elektronische Schaltungen der Einheit im Sinne der Erfindung potenziell auch auf einen gemeinsamen physikalischen Speicher zurückgreifen bzw. mittels derselben physikalischen Digitalschaltung betrieben werden. Dabei ist es nicht relevant, ob verschiedene elektronische Schaltungen innerhalb der Einheit auf einer gemeinsamen Leiterkarte oder auf mehreren, verbundenen Leiterkarten angeordnet sind.

Näher erläutert wird die Erfindung anhand der nachfolgenden Figuren. Es zeigt:
Fig. 1: Ein Radar-basiertes Füllstandsmessgerät an einem Behälter, und
Fig. 2: eine Blockschaltbild des erfindungsgemäßen Füllstandsmessgerätes.

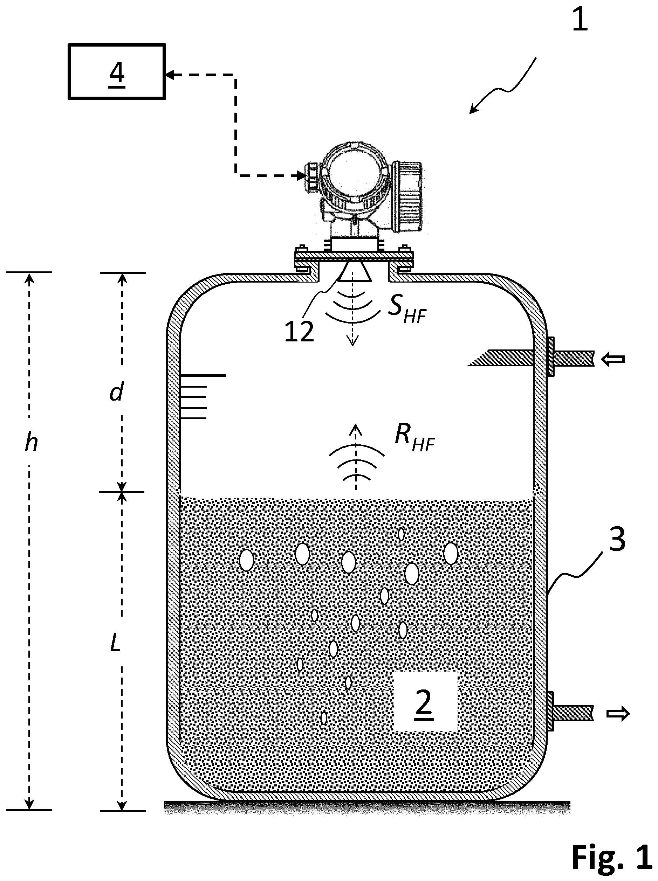

In Fig. 1 wird die Erfindung nachfolgend anhand von Radar-basierter Füllstandsmessung näher erläutert. Zum prinzipiellen Verständnis ist in Fig. 1 daher ein Behälter 3 mit einem Füllgut 2 gezeigt, dessen Füllstand L zu bestimmen ist. Dabei kann der Behälter 3 je nach Art des Füllgutes 2 und je nach Einsatzgebiet bis zu mehr als 100 m hoch sein. Von der Art des Füllgutes 2 und dem Einsatzgebiet hängen auch die Bedingungen im Behälter 3 ab. So kann es im Falle von exothermen Reaktionen beispielsweise zu hoher Temperatur- und Druckbelastung kommen. Bei staubhaltigen oder entzündlichen Stoffen sind im Behälter-Inneren entsprechende Explosionsschutzbedingungen einzuhalten.

Um den Füllstand L unabhängig von den vorherrschenden Bedingungen ermitteln zu können, ist ein nach dem FMC-Prinzip arbeitendes Füllstandsmessgerät 1 oberhalb des Füllgutes 2 in einer bekannten Einbauhöhe h über der Sole des Behälter 3 angebracht. Dabei ist das Füllstandsmessgerät 1 derart Druck- und Mediendicht an einer entsprechenden Öffnung des Behälters 3 befestigt und ausgerichtet, dass lediglich die Antenne 12 des Füllstandsmessgerätes 1 in den Behälter 3 hinein vertikal nach unten gen Füllgut 2 gerichtet ist, während die weiteren Komponenten des Füllstandsmessgerätes 1 außerhalb des Behälters 3 angeordnet sind.

Über die Antenne 12 werden innerhalb eines vordefinierten Frequenzbandes Radar-Signale S_{HF} in Richtung der Oberfläche des Füllgutes 2 ausgesendet.

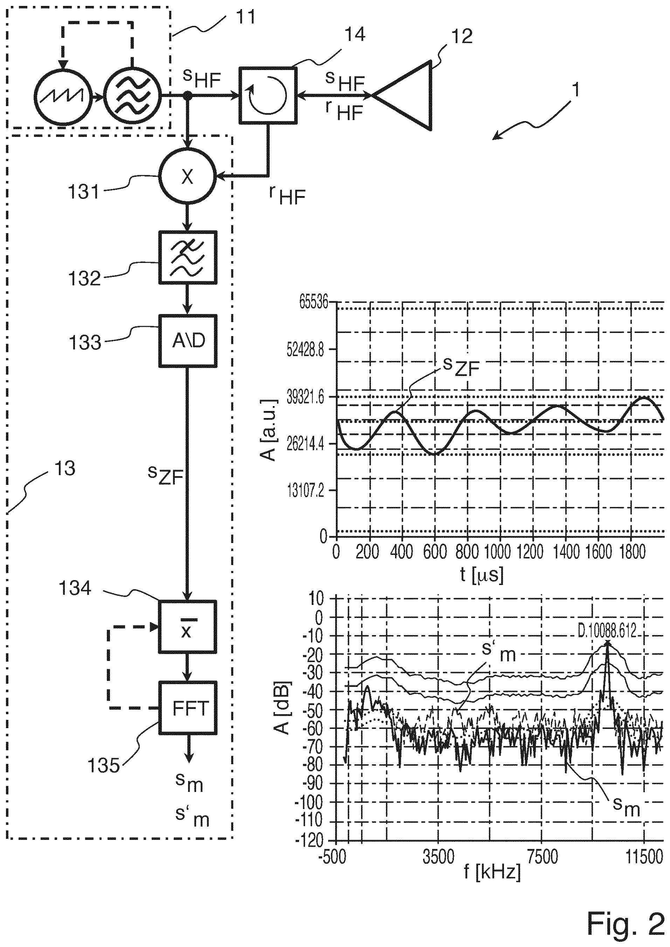

Dabei wird gemäß des FMCW-Prinzips pro Messzyklus die Frequenz des Radar-Signals S_{HF} rampenförmig innerhalb dieses Frequenzbandes, beispielsweise von119 GHz auf 121 GHz, geändert. Nach Reflektion an der Füllgut-Oberfläche empfängt das Füllstandsmessgerät 1 die reflektierten Empfangssignale R_{HF} wiederum über die Antenne 12. Die resultierende Signallaufzeit t zwischen Aussenden und Empfang des jeweiligen Radar-Signals S_{HF}, R_{HF} ist gemäß $t = \frac{2 ∗ d}{c}$ entsprechend proportional zum Abstand d zwischen dem Füllstandsmessgerät 1 und dem Füllgut 2, wobei c die Radar-Ausbreitungsgeschwindigkeit der jeweiligen Lichtgeschwindigkeit entspricht. Die Signallaufzeit t kann vom Füllstandsmessgerät 1 mittels des FMCW- Verfahrens mittelbar anhand des Empfangssignals R_{HF} bestimmt werden, wie anhand von Fig. 2 erläutert wird. Beispielsweise auf Basis einer entsprechenden Kalibration kann das Füllstandsmessgerät 1 die gemessene Laufzeit t dem jeweiligen Abstand d zuordnen. Hierüber kann das Füllstandsmessgerät 1 gemäß $d = h - L$ wiederum den Füllstand L bestimmen, sofern die Einbauhöhe h im Füllstandsmessgerät 1 hinterlegt wird.

In der Regel ist das Füllstandsmessgerät 1 über eine separate Schnittstellen-Einheit, wie etwa "4-20 mA", "PROFIBUS", "HART", oder "Ethernet" mit einer übergeordneten Einheit 4, wie z. B. einem lokalen Prozessleitsystem oder einem dezentralen Server-System verbunden. Hierüber kann der gemessene Füllstandswert L übermittelt werden, beispielsweise um gegebenenfalls Zu- oder Abflüsse des Behälters 3 zu steuern. Es können aber auch anderweitige Informationen über den allgemeinen Betriebszustand des Füllstandsmessgerätes 1 kommuniziert werden.

Fig. 2 zeigt den schaltungstechnischen Aufbau des Füllstandsmessgerätes 1: Demnach wird das auszusendende Radar-Signal S_{HF} als elektrisches Hochfrequenz-Signal s_{HF} in einer Signalerzeugungs-Einheit 11 generiert, die im gezeigten Ausführungsbeispiel auf einer phasengesteuerten Regelschleife (vor allem im Englischen als "*Phase Locked Loop, PLL*" bekannt) basiert.

Dabei wird das Hochfrequenz-Signal s_{HF} gemäß des FMCW-Prinzips mit entsprechend rampen- bzw. sägezahnförmiger Frequenzänderung erzeugt. Im Anschluss wird das Hochfrequenz-Signal s_{HF} über eine Sende-/Empfangs-Weiche 14 der Antenne 12 zugeführt, von wo das Hochfrequenz-Signal s_{HF} als Radar-Signal S_{HF} ausgesandt wird. Dabei kann die Sende-/Empfangs-Weiche 14 beispielsweise als Diplexer oder als Duplexer ausgelegt sein.

Das durch die Antenne 12 empfangene, entsprechende Empfangssignal r_{HF} wird über die Signalweiche 14 in einer Auswerte-Einheit 13 des Füllstandsmssgeräte1 zunächst einer Mischer-Stufe 131 zugeführt. Dort wird das Empfangssignal r_{HF} mit dem von der Signalerzeugungs-Einheit 11 erzeugten Hochfrequenz-Signal s_{HF} gemischt, wodurch gemäß des FMCW-Prinzips ein niederfrequentes Zwischenfrequenz-Signal s_{ZF} generiert wird.

In Signalrichtung hinter der Mischer-Stufe 131 kann optional eine analoge Tiefpass-Filterstufe 132 angeordnet werden, um das Auftreten der Spiegelfrequenzen im digitalisierten Signal zu vermeiden. Wie in Fig. 2 anhand des zeitlichen Verlaufs des Zwischenfrequenzsignals s_{ZF} zu erkennen ist, weist dieses jedoch auch nach etwaiger Tiefpass-Filterung ohne weitere Maßnahmen keine optimal konstante Frequenz bzw. Amplitude auf. Durch eine Analog-/Digital-Wandlerstufe 133 wird das Zwischenfrequenz-Signal s_{ZF} in Signalrichtung hinter der Mischer-Stufe 131 Zeit- bzw.- Wertdiskretisiert, damit eine Transformator-Stufe 135 hieraus mit geringem Rechenaufwand ein Frequenzspektrum s'ₘ erstellen kann. Aus dem Frequenzspektrum s'ₘ kann die Auswerte-Einheit 13 im Optimalfall dasjenige Maximum ermitteln, welches der der Reflektion am Füllgut 2 zuzuordnen ist, um anhand dessen den Abstand d bzw. den Füllstand L zu bestimmen.

Das in Fig. 2 dargestellte Frequenzspektrum s'ₘ verdeutlicht jedoch, dass es ohne weitere Maßnahmen je nach Messumgebung schwierig sein kann, aus dem Frequenzspektrum s'ₘ zwischen den rausch- und störbedingten Maxima dasjenige Maximum zu ermitteln, welches der Reflektion am Füllstand zuzuordnen ist. Hieraus resultiert im Zweifelsfall ein falscher Füllstandswert L.

Wie aus Fig. 2 erfindungsgemäß erkennbar ist, setzt sich das Maximum, dass dem Füllstand zuzuordnen ist, deutlich stärker ab, sofern das entsprechende Frequenzspektrum sₘ bzw. das zugrundeliegende Zwischenfrequenzsignal s_{ZF} in Signalrichtung vor der Fast-Fourier-Transformation einer zeitlichen Mittelung unterzogen wird. Dementsprechend umfasst die Auswerte-Einheit 13 des Füllstandsmessgerätes 1 an entsprechender Stelle erfindungsgemäß eine Mittelungs-Stufe 134, die beispielsweise auf arithmetischer Mittelwertbildung oder Summation des Zwischenfrequenzsignals s_{ZF} basiert. Dabei muss die Mittelungs-Stärke, also die Anzahl an Datenpunkten, über die gemittelt wird, nicht fest vorgegeben werden. Die Mittelungs-Stärke ist optimaler Weise in Abhängigkeit davon einzustellen, ob, bzw. wie stark sich der Füllstand L momentan ändert. Hierfür stehen prinzipiell verschiedene Messparameter zu Verfügung, wie unter anderem:
Die Abstands-Änderung des im aktuellen Messzyklus ermittelten Abstandes d gegenüber dem in einem vorhergehenden Messzyklus ermittelten Abstand d,
die (Kreuz-) Korrelation zwischen dem im aktuellen Messzyklus ermittelten Frequenzspektrum sₘ oder Zwischenfrequenz-Signal s_{ZF}, und dem in einem vorhergehenden Messzyklus erfassten Frequenzspektrum sₘ bzw. Zwischenfrequenz-Signal s_{ZF}, oder
- einer durchschnittlichen, absoluten Abweichung zwischen dem im aktuellen Messzyklus erfassten Zwischenfrequenz-Signals s_{ZF} und dem in einem vorhergehenden Messzyklus erfassten Zwischenfrequenz-Signal s_{ZF}.

Die Steuerung der Mittelungs-Stärke ist insbesondere dann vorteilhaft, wenn sie mit zunehmender Füllstandsänderung abnimmt, bzw. wenn die Mittelung ab einem definierten Grenzwert einer der obigen Parameter komplett ausgesetzt wird. Bezogen auf die einzelnen Parameter bedeutet dies, dass die Mittelungs-Stärke mit zunehmender Abstands-Änderung, mit abnehmender Korrelation, und/oder mit zunehmender Abweichung abnimmt, bzw. umgekehrt. Um diese Regelung der Mittelungs-Stärke umzusetzen, muss die Auswerte-Einheit 13 entsprechend ausgelegt sein, über fortlaufende Messzyklen einen oder mehrere dieser Parameter aus dem Zwischenfrequenz-Signal s_{ZF} bzw. dem Frequenzspektrum sₘ zu bestimmen und die Mittelungs-Stufe 134 entsprechend zu steuern. Durch diese Art der Regelung werden insbesondere Nachlauf-Effekte vermieden, so dass hierdurch das Auffinden des korrekten Maximums im Frequenzspektrum sₘ wiederum erleichtert wird.
- 1: Füllstandsmessgerät
- 2: Füllgut
- 3: Behälter
- 4: Übergeordnete Einheit
- 11: Signalerzeugungs-Einheit
- 12: Antenne
- 13: Auswerte-Einheit
- 14: Sende-/Empfangs-Weiche
- 131: Mischer-Stufe
- 132: Tiefpass-Filterstufe
- 133: Analog-/Digital-Wandlerstufe
- 134: Mittelungs-Stufe
- 135: Transformator-Stufe
- d: Entfernung
- h: Einbauhöhe
- L: Füllstand
- R_{HF}: Empfangssignal
- S_{HF}: Radar-Signal
- sₘ, s'ₘ: Frequenzspektrum
- s_{HF}: Elektrisches Hochfrequenz-Signal
- s_{ZF}: Zwischenfrequenz-Signal

## Patentansprüche

1. FMCW-Radar basiertes Abstandsmessgerät zur Messung eines Abstandes (d) zu einem Objekt (2), umfassend:
- Eine Signalerzeugungs-Einheit (11), die ausgelegt ist, in aufeinanderfolgenden Messzyklen gemäß des FMCW-Verfahrens jeweils ein elektrisches Hochfrequenz-Signal (s_{HF)} zu erzeugen,
- eine Antenne (12), mittels der das Hochfrequenz-Signal (s_{HF}) als Radar-Signal (S_{HF}) in Richtung des Objektes (2) aussendbar und nach Reflektion am Objekt (2) als entsprechendes Empfangssignal (r_{HF}) empfangbar ist, und
- eine Auswerte-Einheit (13), mit
∘ einer Mischer-Stufe (131), die ausgelegt ist, anhand des elektrischen Hochfrequenz-Signals (s_{HF}) und des Empfangssignals (r_{HF}) gemäß des FMCW-Prinzips pro Messzyklus ein niederfrequentes Zwischenfrequenz-Signal (s_{ZF}) zu erzeugen,
∘ einer Transformator-Stufe (135), welche ausgelegt ist, um pro Messzyklus ein Frequenzspektrum (sₘ, s'ₘ) des Auswertungssignals (s_{ZF}) zu erstellen,
wobei die Auswerte-Einheit (13) ausgelegt ist, um anhand des Frequenzspektrums (sₘ, s'ₘ) den Abstand (d) zu bestimmen,
**gekennzeichnet durch**
∘ eine Mittelungs-Stufe (134), die ausgelegt ist, das Zwischenfrequenz-Signal (s_{ZF}) mehrerer Messzyklen in Signalrichtung vor Erstellung des Frequenzspektrums (sₘ, s'ₘ) zeitlich zu mitteln,
wobei die Mittelungs-Stufe (134) ausgelegt ist, die zeitliche Mittelung des Zwischenfrequenz-Signals (s_{ZF}) im jeweiligen Messzyklus in Abhängigkeit
- einer Abstands-Änderung des im aktuellen Messzyklus ermittelten Abstandes (d) gegenüber dem in einem vorhergehenden Messzyklus ermittelten Abstand (d),
- einer Korrelation zwischen dem im aktuellen Messzyklus ermittelten Frequenzspektrum (sₘ) oder Zwischenfrequenz-Signal (s_{ZF}), und dem in einem vorhergehenden Messzyklus erfassten Frequenzspektrum (sₘ) bzw. Zwischenfrequenz-Signal (s_{ZF}), oder
- einer durchschnittlichen, absoluten Abweichung zwischen dem im aktuellen Messzyklus erfassten Zwischenfrequenz-Signals (s_{ZF}) und dem in einem vorhergehenden Messzyklus erfassten Zwischenfrequenz-Signal (s_{ZF})
zu ändern oder zu deaktivieren.

2. Abstandsmessgerät nach Anspruch 1, umfassend:
- eine Analog-/Digital-Wandlerstufe (133), die ausgelegt ist, das Zwischenfrequenz-Signal (s_{ZF}) in Signalrichtung vor der Mittelungs-Stufe (134) zu digitalisieren.

3. Abstandsmessgerät nach Anspruch 1 oder 2, wobei die Mittelungs-Stufe (134) ausgelegt ist, eine Mittelungs-Stärke der zeitlichen Mittelung des Zwischenfrequenz-Signals (s_{ZF}) in Abhängigkeit der Abstands-Änderung, der Korrelation bzw. der Abweichung im aktuellen oder darauffolgenden Messzyklus derart zu ändern,
- dass die Mittelungs-Stärke mit
∘ zunehmender Abstands-Änderung
∘ abnehmender Korrelation, und/oder
∘ zunehmender Abweichung
abnimmt, bzw.
- dass die Mittelungs-Stärke mit
∘ zunehmender Korrelation,
∘ abnehmender Abstands-Änderung, und/oder
∘ abnehmender Abweichung
zunimmt.

4. Abstandsmessgerät nach zumindest einem der vorhergehenden Ansprüche, wobei die Mittelungs-Stufe (134) ausgelegt ist, das Zwischenfrequenz-Signal (s_{ZF}) zeitlich mittels
- arithmetischer Mittelwertbildung
- Summation,
- Medianbildung,
- eines FIR-Filters, oder
- eines IIR-Filters
zu mitteln.

5. Verfahren zur Messung eines Abstandes (d) zu einem Objekt (2) mittels des FMCW-Prinzips, folgende Verfahrensschritte, die in aufeinanderfolgenden Messzyklen wiederholt werden, umfassend:
- Erzeugung des elektrisches Hochfrequenz-Signals (s_{HF}) gemäß des FMCW-Verfahrens,
- Aussenden des Hochfrequenz-Signals (s_{HF}) als Radar-Signal (S_{HF}) in Richtung des Objektes (2),
- Empfang des entsprechendes Empfangssignals (r_{HF}) nach Reflektion am Objekt (2),
- Mischen des elektrischen Hochfrequenz-Signals (s_{HF}) und des Empfangssignals (r_{HF}) zu einem niederfrequenten Zwischenfrequenz-Signal (s_{ZF}),
**gekennzeichnet durch** zeitliche Mittelung des Zwischenfrequenz-Signals (s_{ZF}) über mehrere Messzyklen, wobei die zeitliche Mittelung des Zwischenfrequenz-Signals (s_{ZF}) im jeweiligen Messzyklus in Abhängigkeit
∘ einer Abstands-Änderung des im aktuellen Messzyklus ermittelten Abstandes (d) gegenüber dem in einem vorhergehenden Messzyklus ermittelten Abstand (d),
∘ einer Korrelation zwischen dem im aktuellen Messzyklus ermittelten Frequenzspektrum (sₘ) oder Zwischenfrequenz-Signal (s_{ZF}), und dem in einem vorhergehenden Messzyklus erfassten Frequenzspektrum (sₘ) bzw. Zwischenfrequenz-Signal (s_{ZF}), oder
∘ einer durchschnittlichen, absoluten Abweichung zwischen dem im aktuellen Messzyklus erfassten Zwischenfrequenz-Signal (s_{ZF}) und dem in einem vorhergehenden Messzyklus erfassten Zwischenfrequenz-Signal (SZF)
geändert oder deaktiviert wird,
- Erstellung eines Frequenzspektrums (sₘ, s'ₘ) des zeitlich gemittelten Auswertungssignals (s_{ZF}), und
- Bestimmung des Abstandes (d) anhand des Frequenzspektrums (sₘ, s'ₘ).

6. Verwendung des Abstandsmessgerätes (1) nach einem der Ansprüche 1 bis 4 zur Messung eines Füllstandes (L) eines Füllgutes (2) in einem Behälter (3).

## Claims

1. An FMCW radar-based distance meter for measuring a distance (d) from an object (2), comprising:
- A signal generating unit (11), which is configured to generate an electric high-frequency signal (s_{HF)} in consecutive measurement cycles using the FMCW method,
- an antenna (12) which can be used to transmit the high-frequency signal (s_{HF)} toward the object (2) as a radar signal (s_{HF)} and to receive it as a corresponding received signal (r_{HF}) after reflection at the object (2), and
- an evaluation unit (13), with
∘ a mixer stage (131), which is configured to generate a low-frequency intermediate frequency signal (s_{ZF}) during each measurement cycle according to the FMCW principle based on the electric high-frequency signal (s_{HF}) and the received signal (r_{HF}),
∘ a transformer stage (135), which is configured to generate a frequency spectrum (sₘ, s'ₘ) for the evaluation signal (s_{ZF}) during each measurement cycle,
∘ wherein the evaluation unit (13) is configured to work out the distance (d) based on the frequency spectrum (sₘ, s'ₘ),
**characterized by**
∘ an averaging stage (134), which is configured to average over time the intermediate frequency signal (s_{ZF}) from multiple measurement cycles in the signal direction before the frequency spectrum (sₘ, s'ₘ) is generated,
wherein the averaging stage (134) is configured to modify or deactivate the time averaging of the intermediate frequency signal (s_{ZF}) in the specific measurement cycle depending on
- a distance change of the distance (d) determined in the current measurement cycle compared to the distance (d) determined in a preceding measurement cycle,
- a correlation between the frequency spectrum (sₘ) determined in the current measurement cycle or the intermediate frequency signal (s_{ZF}) and the frequency spectrum (sₘ) determined in a preceding measurement cycle or the intermediate frequency signal (s_{ZF}), or
- an average, absolute deviation between the intermediate frequency signal (s_{ZF}) detected in the current measurement cycle and the intermediate frequency signal (s_{ZF}) detected in a preceding measurement cycle.

2. The distance meter as claimed in claim 1, comprising:
- an analog/digital converter stage (133), which is configured to digitize the intermediate frequency signal (s_{ZF}) in the signal direction before it reaches the averaging stage (134).

3. The distance meter as claimed in claim 1 or 2,
wherein the averaging stage (134) is configured to modify an averaging intensity of the time averaging of the intermediate frequency signal (s_{ZF}) depending on the distance change, correlation or deviation in the current or subsequent measurement cycle in such a way that
- the averaging intensity decreases as
∘ the distance change increases,
∘ the correlation decreases, and/or
∘ the deviation increases, or
- the averaging intensity increases as
∘ the correlation increases,
∘ the distance change decreases, and/or
∘ the deviation decreases.

4. The distance meter as claimed in at least one of the preceding claims,
wherein the averaging stage (134) is configured to average the intermediate frequency signal (s_{ZF}) over time by means of
- arithmetic mean value formation,
- summation,
- median formation,
- an FIR filter, or
- an IIR filter.

5. A method for measuring a distance (d) from an object (2) using the FMCW principle, comprising the following process steps which are repeated in consecutive measurement cycles:
- Generating the electric high-frequency signal (s_{HF}) using the FMCW method,
- transmitting the high-frequency signal (s_{HF}) toward the object (2) as a radar signal (S_{HF}),
- receiving the corresponding received signal (r_{HF}) after reflection at the object (2),
- mixing the electric high-frequency signal (s_{HF}) and the received signal (r_{HF}) to produce a low-frequency intermediate frequency signal (s_{ZF}),
**characterized by**
time averaging of the intermediate frequency signal (s_{ZF}) over multiple measurement cycles, wherein the time averaging of the intermediate frequency signal (s_{ZF}) in the specific measurement cycle is modified or deactivated depending on
∘ a distance change of the distance (d) determined in the current measurement cycle compared to the distance (d) determined in a preceding measurement cycle,
∘ a correlation between the frequency spectrum (sₘ) determined in the current measurement cycle or the intermediate frequency signal (s_{ZF}) and the frequency spectrum (sₘ) determined in a preceding measurement cycle or the intermediate frequency signal (s_{ZF}), or
∘ an average, absolute deviation between the intermediate frequency signal (s_{ZF}) detected in the current measurement cycle and the intermediate frequency signal (s_{ZF}) detected in a preceding measurement cycle,
- creating a frequency spectrum (sₘ, s'ₘ) for the time-averaged evaluation signal (s_{ZF}), and
- determining the distance (d) based on the frequency spectrum (sₘ, s'ₘ).

6. The use of the distance meter (1) as claimed in one of claims 1 to 4 for measuring a fill level (L) of a filling material (2) in a container (3).

## Revendications

1. Appareil de mesure de distance basé sur un radar FMCW, lequel appareil est destiné à mesurer une distance (d) par rapport à un objet (2), lequel appareil comprend :
- Une unité de génération de signaux (11), laquelle est conçue pour générer, au cours de cycles de mesure successifs selon le procédé FMCW, respectivement un signal électrique haute fréquence (s_{HF}),
- Une antenne (12), au moyen de laquelle le signal haute fréquence (s_{HF}) peut être émis en tant que signal radar (S_{HF}) en direction de l'objet (2) et, après réflexion sur l'objet (2), peut être reçu en tant que signal de réception (r_{HF}) correspondant, et
- Une unité d'évaluation (13), comportant
∘ un étage mélangeur (131), lequel est conçu pour générer, à partir du signal électrique haute fréquence (s_{HF}) et du signal de réception (r_{HF}), selon le principe FMCW, un signal de fréquence intermédiaire basse fréquence (s_{ZF}) par cycle de mesure,
∘ un étage de transformation (135), lequel est conçu pour établir, par cycle de mesure, un spectre de fréquences (sₘ, s'ₘ) du signal d'évaluation (s_{ZF}), l'unité d'évaluation (13) étant conçue pour déterminer la distance (d) sur la base du spectre de fréquences (sₘ, s'ₘ),
**caractérisé par**
∘ un étage de moyennage (134), lequel est conçu pour effectuer un moyennage temporel du signal de fréquence intermédiaire (s_{ZF}) de plusieurs cycles de mesure dans la direction du signal avant l'établissement du spectre de fréquences (sₘ, s'ₘ),
l'étage de moyennage (134) étant conçu pour modifier ou désactiver le moyennage temporel du signal de fréquence intermédiaire (s_{ZF}) dans le cycle de mesure respectif en fonction
- d'une variation de la distance (d) déterminée au cours du cycle de mesure actuel par rapport à la distance (d) déterminée lors d'un cycle de mesure précédent,
- d'une corrélation entre le spectre de fréquences (sₘ) ou le signal de fréquence intermédiaire (s_{ZF}), déterminé au cours du cycle de mesure actuel, et le spectre de fréquences (sₘ) ou le signal de fréquence intermédiaire (s_{ZF}) déterminé lors d'un cycle de mesure précédent, ou
- d'un écart absolu moyen entre le signal de fréquence intermédiaire (s_{ZF}) déterminé lors du cycle de mesure actuel et le signal de fréquence intermédiaire (s_{ZF}) déterminé lors d'un cycle de mesure précédent.

2. Appareil de mesure de distance selon la revendication 1, comprenant :
- un étage de conversion analogique-numérique (133) conçu pour numériser le signal de fréquence intermédiaire (s_{ZF}) dans la direction du signal avant l'étage de moyennage (134).

3. Appareil de mesure de distance selon la revendication 1 ou 2, pour lequel l'étage de moyennage (134) est conçu pour modifier l'intensité du moyennage temporel du signal de fréquence intermédiaire (s_{ZF}) en fonction de la variation de distance, de la corrélation ou de l'écart dans le cycle de mesure actuel ou suivant, de telle sorte
- que l'intensité de moyennage diminue
∘ lorsque la variation de distance augmente,
∘ lorsque la corrélation diminue et/ou
∘ lorsque l'écart augmente, ou
- que l'intensité de moyennage augmente
∘ lorsque la corrélation augmente,
∘ lorsque la variation de distance diminue et/ou
∘ lorsque l'écart diminue.

4. Appareil de mesure de distance selon au moins l'une des revendications précédentes, pour lequel l'étage de moyennage (134) est conçu pour calculer la moyenne du signal de fréquence intermédiaire (s_{ZF}) dans le temps au moyen d'un
- calcul de moyenne arithmétique
- d'une sommation,
- d'un calcul de médiane,
- d'un filtre FIR ou
- d'un filtre IIR.

5. Procédé destiné à la mesure d'une distance (d) par rapport à un objet (2) selon le principe FMCW, lequel procédé comprend les étapes suivantes - étapes qui sont répétées au cours de cycles de mesure successifs :
- Génération d'un signal électrique haute fréquence (s_{HF}) selon le procédé FMCW,
- Émission du signal haute fréquence (s_{HF}) sous forme de signal radar (S_{HF}) en direction de l'objet (2),
- Réception du signal de réception correspondant (r_{HF}) après réflexion sur l'objet (2),
- Mélange du signal électrique haute fréquence (s_{HF}) et du signal de réception (r_{HF}) pour former un signal de fréquence intermédiaire basse fréquence (s_{ZF}),
**caractérisé par**
un moyennage temporel du signal de fréquence intermédiaire (s_{ZF}) sur plusieurs cycles de mesure, le moyennage temporel du signal de fréquence intermédiaire (s_{ZF}) dans chaque cycle de mesure étant modifié ou désactivé en fonction
∘ d'une variation de la distance (d) déterminée au cours du cycle de mesure actuel par rapport à la distance (d) déterminée lors d'un cycle de mesure précédent,
∘ d'une corrélation entre le spectre de fréquences (sₘ) ou le signal de fréquence intermédiaire (s_{ZF}) déterminé au cours du cycle de mesure actuel et le spectre de fréquences (sₘ) ou le signal de fréquence intermédiaire (s_{ZF}) déterminé au cours d'un cycle de mesure précédent, ou
∘ d'un écart absolu moyen entre le signal de fréquence intermédiaire (s_{ZF}) déterminé au cours du cycle de mesure actuel et le signal de fréquence intermédiaire (s_{ZF}) déterminé lors d'un cycle de mesure précédent,
- Génération d'un spectre de fréquences (sₘ, s'ₘ) du signal d'évaluation moyenné dans le temps (s_{ZF}), et
- Détermination de la distance (d) sur la base du spectre de fréquences (sₘ, s'ₘ).

6. Utilisation de l'appareil de mesure de distance (1) selon l'une des revendications 1 à 4, lequel appareil est destiné à mesurer le niveau (L) d'un produit (2) dans un réservoir (3).
